Europäisches Patentamt

European Patent Office

Office européen des brevets

(11) Veröffentlichungsnummer: **0 006 113**
**B1**

(12) **EUROPÄISCHE PATENTSCHRIFT**

(45) Veröffentlichungstag der Patentschrift:
29.04.81

(21) Anmeldenummer: **79101042.4**

(22) Anmeldetag: **05.04.79**

(51) Int. Cl.³: **B 05 D 7/14,** B 05 D 1/38,
C 09 D 3/00, C 08 L 9/00

(54) **Verwendung einer wässrigen Polybutadiendispersion als haftvermittelnde Zwischenschicht beim Herstellen von Polyamidüberzügen nach dem Schmelzüberzugsverfahren.**

(30) Priorität: **12.06.78 DE 2825707**

(43) Veröffentlichungstag der Anmeldung:
**09.01.80 Patentblatt 80/1**

(45) Bekanntmachung des Hinweises auf die Patenterteilung:
**29.04.81 Patentblatt 81/17**

(84) Benannte Vertragsstaaten:
**DE FR GB IT SE**

(56) Entgegenhaltungen:
**DE-A-1 816 330**
**DE-A-2 003 702**
**DE-A-2 264 467**
**DE-B-1 244 623**
**DE-B-1 292 288**
**FR-A-1 451 631**
**FR-A-1 478 274**
**US-A-3 057 746**
**US-A-3 203 822**

(73) Patentinhaber: **CHEMISCHE WERKE HÜLS AG,
Postfach 1320, D-4370 Marl 1 (DE)**

(72) Erfinder: **Feldmann, Rainer, Dr., Leverkusener
Strasse 27, D-4370 Marl (DE)**
Erfinder: **Gorke, Klaus, Dr., Am Mühlenweg 14,
D-4358 Haltern (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verwendung einer wäßrigen Polybutadiendispersion als haftvermittelnde Zwischenschicht beim Herstellen von Polyamidüberzügen nach dem Schmelzüberzugsverfahren

Gegenstand der Erfindung ist die Verwendung einer wäßrigen Polybutadiendispersion als haftvermittelnde Zwischenschicht beim Herstellen von Polyamidüberzügen auf metallischen Gegenständen.

Zur Erzielung einer hohen Korrosions- und Chemikalienbeständigkeit ist es beim Herstellen von Überzügen nach dem Schmelzüberzugsverfahren erforderlich, daß diese fest auf dem Untergrund haften. Unter Schmelzüberzugsverfahren wird das Wirbelsintern, Flammspritzen oder das elektrostatische Beschichten verstanden.

Es sind die verschiedenartigsten Substanzen als haftvermittelnde Zwischenschicht verwendet worden. So beschreibt die AT-PS 236 533 das Verwenden von wärmehärtbaren Phenolharzen gegebenenfalls zusammen mit hermoplastischen Harzen. Aus der US-PS 3 203 822 und der DE-AS 12 44 623 ist es bekannt, Styrol-Butadien-Copolymerisate einzusetzen. Die DE-PS 20 03 702 verwendet schließlich ein Gemisch aus einem epoximodifizierten Alkydharz und ungesättigtem Polyesterharz. Die bekanntgemachte japanische Patentanmeldung Sho 47 (1972) 4951 verwendet schließlich wärmehärtende Polymere des Butadiens mit einem durchschnittlichen Molekulargewicht von 1000 bis 5000, wobei insbesondere die entsprechend niedermolekularen ataktischen 1,2-Polybutadiene mit einem Gehalt an 1,2-Bindungen von ungefähr 90%, eingesetzt werden.

Nach dem Stande der Technik werden diese haftvermittelnden Substanzen in der Form von Lösungen in organischen Lösemitteln, wie Testbenzin, Xylol, Chlorkohlenwasserstoffe, Ketonen oder Estern eingesetzt. Das Arbeiten mit diesen brennbaren Lösemitteln erfordert zum Schutz der Personen sowie zum Schutz der Umwelt aufwendige Schutzvorrichtungen, insbesondere auch im Hinblick auf die möglichen Pulverexplosionen.

Aufgabe der Erfindung ist es daher, ein wäßriges System zu entwickeln, welches das Herstellen mindestens gleich guter, haftverbessernder Überzüge erlaubt, jedoch gleichzeitig eine Unterkorrosion verhindert. Die Lösung dieser Aufgabe gelingt mit Hilfe einer wäßrigen Dispersion, die als ausgewählte haftverbessernde Substanz ein flüssiges Polybutadien mit einer dynamischen Viskosität von 70 bis 30 000 m Pa s und einer Konfiguration von 40 bis 95% cis-1.4, von 0 bis 30% trans-1.4 und von 1 bis 60% 1.2-Einheiten und, bezogen auf das eingesetzte Polybutadien, 0,5 bis 10 Gewichtsprozent eines Emulgators enthält.

Das verwendete flüssige Polybutadien hat bevorzugt eine dynamische Viskosität von 500 bis 5000 m Pa s. Die bevorzugte Konfiguration entspricht 60 bis 90% 1.4-cis-, 5 bis 30% 1.4-trans- und 1 bis 40% 1.2-Einheiten. Derartige Polymerisate werden bekanntlich erhalten durch Lösungspolymerisation von Butadien in Gegenwart von bekannten Ziegler-Katalysatoren.

In der Dispersion sind die flüssigen Polybutadiene in einer Konzentration 1 bis 70, vorzugsweise 10 bis 60, insbesondere 20 bis 50 Gewichtsprozent, enthalten. Als Dispergatoren bzw. Emulgatoren sind grundsätzlich sowohl kationische Emulgatoren, wie quartäre Ammoniumsalze, anionische Emulgatoren, wie Alkylbenzolsulfonate, Alkylsulfonate, Alkylsulfate oder Seifen oder nichtionische Emulgatoren, wie Polyglykolether oder Zuckerester geeignet. Wegen der besseren Wasserfestigkeit des Überzuges werden nichtionische Emulgatoren bevorzugt. Insbesondere geeignet als nichtionische Emulgatoren sind Alkylarylpolyglykolether mit 6 bis 10 Ethylenoxideinheiten, wie besonders die entsprechenden Octyl- oder Nonylphenoloxethylate. Der Emulgator soll mindestens in Mengen von 0,5 Gewichtsprozent, bezogen auf das Polybutadien, verwendet werden. Bei geringeren Konzentrationen bleiben die Dispersionen nicht hinreichend stabil; die obere Grenze der Konzentration soll 10 Gewichtsprozent nicht überschreiten, weil dann die Haftfestigkeit des Polyamidüberzuges leidet. Vorteilhaft verwendet man den Emulgator in einer Konzentration von 3 bis 7 Gewichtsprozent. Die haftvermittelnde Dispersion kann durch Spritzen, Tauchen oder Streichen verarbeitet werden. Die haftvermittelnde Zwischenschicht wird in bekannter Weise vor dem Auftragen des Polyamidpulvers auf 300 bis 450° C erhitzt.

Überraschenderweise ist trotz des Einsatzes der wäßrigen Dispersion, insbesondere auch in Verbindung mit dem darin enthaltenen Emulgator, kein verstärktes Unterrosten des Überzuges zu beobachten. Ebenso wird die Haftfestigkeit insbesondere gegenüber wäßrigen heißen Waschmittellaugen nicht vermindert.

### Beispiel 1

Eine mit Trichlorethylen entfettete und gesandstrahlte Eisenplatte von 1 mm Dicke wird mit einer 50%igen wäßrigen Dispersion eines Polybutadiens mit einer dynamischen Viskosität von 780 m Pa s, 72% 1.4-cis, 27% 1.4-trans, 1% 1.2-Einheiten und einem Gehalt von 5 Gewichtsprozent, bezogen auf das Polybutadien eines Octylphenoloxethylates mit 8 Ethylenoxideinheiten eingesprüht. Anschließend wird 5 Minuten bei 400° C eingebrannt und daran in einem Wirbelsinterbad a) mit Polyamid 12 und b) mit Polyamid 11 beschichtet.

Die Prüfung der Haftfestigkeit erfolgt an einem Kreuzgitterschnitt. In diesen Schnitt wird mit Hilfe des sogenannten Erichsen-Tiefungsgerätes eine Tiefung von 6 mm angebracht. Anschließend wird versucht, die Beschichtung mit Hilfe eines Klebebandes abzuziehen. Sowohl im Falle a) als auch b) betrug die Haftfestigkeit 100% Auch beim Lagern einer Probe in Heißwasser von 90°C oder in einer 90°C heißen 3%igen Lösung eines handelsüblichen Grobwaschmittels war nach 1500 Stunden am Einschnitt keine Unterwanderung und keine verminderte Haftfestigkeit festzustellen.

### Beispiel 2

In gleicher Weise wurde eine 20%ige wäßrige Dispersion mit einem Gehalt von 7% eines Nonylphenoloxethylates mit 8 Mol EO als Emulgator eingesetzt. Die Haftung war ebenfalls gleich gut.

### Vergleichsbeispiel

Es wird nach dem Beispiel 1 gearbeitet, nur daß anstelle der dort beschriebenen 50% wäßrigen Polybutadien-Dispersion eine nach der japanischen Patentanmeldung Sho-47 (1972) 4951 hergestellte Polybutadienlösung mit einem Gehalt von ungefähr 90% 1.2-Bindungen als 30%ige Lösung in Testbenzin eingesetzt wird. Nach dem in Beispiel 1 beschriebenen Haftungstest war nach 1000 Stunden schon eine Unterwanderung an dem Einschnitt feststellbar.

### Patentanspruch

Verwendung einer wäßrigen Polybutadiendispersion als haftvermittelnde Zwischenschicht beim Herstellen von Polyamidüberzügen auf metallischen Gegenständen nach dem Schmelzüberzugsverfahren, dadurch gekennzeichnet, daß die Dispersion flüssiges Polybutadien mit einer dynamischen Viskosität von 70 bis 30 000 m Pa s und einer Konfiguration von 40 bis 95% cis-1.4, 0 bis 30% trans-1.4, 1 bis 60% 1.2-Einheiten und, bezogen auf das Polybutadien, 0,5 bis 10 Gewichtsprozent eines Emulgators enthält.

### Claim

An aqueous polybutadiene dispersion for use as an adhesive intermediate layer in producing polyamide coatings upon metallic substrates in accordance with a hot coating process, wherein this dispersion contains liquid polybutadiene having a dynamic viscosity of 70–30 000 m Pa s and a configuration of 40–95% of cis-1.4, 0–30% of trans-1.4, 1–60% of 1.2 units and, related to polybutadiene, 0.5–10 wt.% of an emulsifier.

### Revendication

Utilisation d'une dispersion de polybutadiène aqueuse comme couche intermédiaire adhérisante lors de la préparation de revêtements en polyamide appliqués sur des objets métalliques suivant un procédé de revêtement par fusion, caractérisée par le fait que la dispersion contient du polybutadiène liquide ayant une viscosité dynamique de 70 à 30 000 m Pa s et une configuration de 40 à 95% de doubles liaisons cis-1,4, de 0 à 30% de doubles liaisons trans-1,4, de 1 à 60% de doubles liaisons 1,2 (vinyliques) et — rapporté au polybutadiène — de 0,5 à 10% en poids d'un émulsifiant.